# EUROPEAN PATENT APPLICATION

(11) **EP 2 797 141 A1**
(43) Date of publication of application: **29.10.2014**
(21) Application number: 13164940.2
(22) Date of filing: 23.04.2013
(51) Int. Cl.: H01M 4/131, H01M 4/485, H01M 4/587, H01M 10/054

(54) **Anodes for dual ion secondary electrical energy storage devices**

(71) Applicant: Pädagogische Hochschule Freiburg, 79117 Freiburg (DE)
(72) Inventor: The designation of the inventor has not yet been filed
(74) Representative: Dr. Langfinger & Partner

(57) **Abstract**

Anode of a dual-ion Na- or K-ion based secondary energy storage device based on a Ti-containing material and Na- or K-ion based secondary energy storage device of the dual ion-type comprising an anode, a cathode and an electrolyte wherein the anode comprises a Ti-containing material.

## Description

The present invention relates to anodes for dual-ion secondary electrical energy storage devices.

Li-ion secondary batteries are the electrical energy storage devices with the best performance available today. The combination of high energy density and cycle stability as well as the low molecular weight of Li are good prerequisites for the use of Li in electrochemical battery systems.

Since the introduction of the first lithium ion secondary batteries in the last decade of the last century this battery type has become the predominant battery for electronic devices and is also under active current development for electron mobility applications.

In a classical lithium ion secondary battery of the so-called rocking chair type lithium cations are intercalated and de-intercalated into the electrode materials of the cell.

In view of the limited availability of lithium metal as a resource, sodium metal and sodium-ion battery systems have become the subject of more intense research activities in the recent past again after such systems had been quite intensely studied in the decades from 1970 to 1990.

Different to lithium metal sodium metal has an abundant availability and thus offers the prospect of a cost-effective and environmentally friendly solution as a replacement for lithium-ion secondary batteries in certain applications.

However, it has to be recognized that the electrochemical processes at the anode, the cathode and in the electrolyte solution of lithium-ion secondary batteries are not transferable to sodium or potassium secondary batteries for a number of reasons.

One central problem is the compatibility of anode and cathode material in the course of the intercalation in and de-intercalation of the metal cations during charge and discharge of the secondary battery. In particular on the cathode side of the device structural modifications occur would have a negative influence on the cycle stability of that cell.

Having this in mind, the concept of the so-called-dual-ion cell-it appears to be of particular interest. The electrochemical storage devices of this type differ fundamentally from the so-called rocking chair ion cells, where only cations are intercalated and de-intercalated curing the charge and discharge cycles. In the dual-ion cell type two different intercalants are involved and the electrolyte concentration changes as the dual-ion cell is charged and discharged.

During the charge of a dual-ion cell, sometimes also referred to as dual-carbon cell (cells with two carbon-based electrodes were the first type of dual-ion cells described in the prior art), the electrolyte cation is intercalated into the negative electrode and the electrolyte anion intercalated into the positive electrode.

Accordingly, dual-ion secondary energy storage devices require an anode material which is capable to reversibly intercalated large anions. At the same time, the negative electrode material must be capable of reversibly intercalating the electrolyte cation, which is the lithium ion in a lithium-based dual-ion cell.

Kim et al., Adv. Energy Mat. 2012, 2, 710-721 (2012) describe and summarize the current research efforts on electrode materials for rechargeable sodium-ion batteries of the rocking chair type, i.e. sodium-ion batteries where only cations are intercalated and D-intercalated curing the charge and discharge of the cell. Kim discloses various carbon compounds as well as various non--carbon compounds as possible electrode materials.

US2009/0253025 discloses secondary hybrid aqueous energy storage device comprising an anode, a cathode which is capable of reversibly intercalating sodium cations, separator and a sodium cation containing aqueous electrolyte, i.e. sodium based cells of the rocking-chair type.

Amongst the materials disclosed are also titanium-based intercalation compounds which have been shown to reversibly intercalate sodium ions..

There is no information provided concerning the capability of these materials suitable for the manufacture of anodes to intercalate anions as is necessary for dual-ion cells.

Gunawardhana et al., 2012 2nd Int. Conf. on Power and Energy Systems (ICPES 2012), IPCSIT 56(2012), DOI 10.7763/IPCSIT.2012.V56.11 describe novel hybrid capacitors comprising a hollow titania nano sphere as anode and a KS-6 cathode ( KS-6 is an artificial graphite grade available from Timcal Co. Ltd.).

The charge/discharge mechanism of the system described is exclusively based on intercalation and D-intercalation of the hexafluoro phosphate anion at the cathode and the lithium cation at the anode.

No information is provided concerning dual-ion batteries based on sodium or potassium ion's and the titanium oxide materials are exclusively described as constituents for the cathode in the cell.

Palacin et al., Chem. Mater. 2011, 23, 4109 describe the incorporation of two sodium ions in a compound represented by the chemical formula Na₂Ti₃O₇ and the use of such material as anode materials in a rocking-chair Na-based cell.

Titanium oxide-based materials offer the end wanted of extraordinary negative potentials of the electrode was as a standard hydrogen electrode in a secondary battery system. Furthermore, it has been shown in the intercalation of cations that titanium oxide based electrode materials show a significantly reduced tendency for the formation of dendrites which is one of the major reasons for failure of secondary batteries.

Accordingly, there is an ongoing need to develop new anode materials capable of reversibly intercalating cations from an electrolyte during the charge and discharge of a sodium-or potassium-ion cell of the dual-ion type.

Accordingly, it was an object of the present invention to provide of dual-ion cells based on sodium or potassium which show a stable and reversible intercalation of anions and thus a good cycle stability.

This object has been solved in accordance with the present invention by anode materials for a dual-ion dual-ion Na- or K-ion secondary energy storage device based on a titanium-containing material.

Preferred embodiments of the present invention are set forth in the dependent claims and the detailed description hereinafter.

In accordance with a first embodiment of the present invention and anode of a dual-ion Na- or K-ion based secondary energy storage device is provided which is based on a Ti-containing material.

Preferred titanium containing materials in the anodes in accordance with the present invention are based on an oxide of titanium, more preferably on titanium dioxide (also commonly referred to as titania).

Suitable and preferred titanium containing materials are e.g. titanium-based sodium compounds which are capable to reversibly intercalated sodium. Layered NaTiO₂ with an electrochemical activity of approximately 0.3 -0.5 sodium ions which can be intercalated depending on the cut-off voltage may be mentioned as a first example. In the layered structures, the alkali cations intercalate between the layers of titanium metal oxygen octahedron. The oxides with intercalated sodium ion's exist in several body types depending on the amount of sodium intercalated. The prototypes differ in the stacking of the oxygen layers resulting in different intercalation the sites for the alkali cation. Layered NaTiO₂ suitable for use in the present invention is known to the skilled person and commercially available from various sources so that no for that detailed information is necessary here.

Na₂Ti₃O₇ is capable of reversibly intercalating to sodium anions. A reversible phase transition takes place betweenNa₂Ti₃O₇ and a Na₁₂Ti₁₀O₂₈-like Na₄Ti₃O₇ curing the electrochemical reaction.

Another suitable material for the anodes in accordance with the present invention are titania-based nano materials, i.e. materials having an average particle size (weight average medium particle diameter) in case of spherical particles of less than 150 µm.

Hollow titania nanospheres are a preferred example of titanium-based materials in the anodes of the present invention. Such materials may be obtained by the process described in Gunawardhana et al., 2012 2nd Int. Conf. on Power and Energy Systems (ICPES 2012), IPCSIT 56(2012), DOI 10.7763/IPCSIT.2012.V56.11.

In accordance with this process that hollow titania nano spheres are obtained with micelles of poly(styrene-b-acrylic acid-b-ethylene oxide (PS-b-PAA-b-PEO) using titanium(IV) butoxide (TBOT) as follows:

Polymeric micelles solution is prepared by dissolving the required amount of the polymer in water and then transferred to a volumetric flask to obtain a stock solution of 0.5 g/L. The micelle solution is adjusted to pH 9 with dilute NaOH. The micelle solution containing NH3 is stirred for a few minutes followed by the addition of the TBOT (TBOT/PAA molar ratio 3 to 8) under vigorous stirring. The milky suspension was stirred at room temperature for one hour and aged at 90°C for 48 hours under static conditions. The composite particles are repeatedly washed with distilled water and ethanol and dried at 60°C. In order to remove the polymeric template as well as to crystallize the shower wall, the composite particles are thereafter heated to 500°C for three hours under air to obtain the final material.

Suitable oxides can have the following general formula during use:AₓTi_{y}O_{z} wherein a is sodium or potassium, x is within the range of 0 to 1 before use and within the range of 0 to 10 during use, y is within the range of 1 to 3, preferably within the range of 1.5 and 2.5 and said is within the range of 2 to 7, preferably in the range of 3.5 to 4.5.

Preferred oxides of titanium are titanium dioxide, titanium monoxide and died titanium trioxide to mention the most common representatives of titanium oxides.

Among these titanium dioxide or titania is the naturally occurring oxide of titanium. It occurs in a number of different modifications, inter alia ilmenite, rutile and anatase. Due to its availability titanium dioxide is the preferred oxide of titanium used in accordance with the present invention for the anodes of the present invention.

In some cases it has shown to be advantageous if the material used for the anode in accordance with the present invention contains sodium or potassium ions prior to use. While this is not absolutely necessary, it is a prerequisite that he electrolyte must be able to incorporate into the active anode by intercalation during operation of the device but this is facilitated by the presence of sodium or potassium ions prior to use.

The skilled person is aware of further titanium containing materials for use in the manufacture of anodes and will select the appropriate material depending on the circumstances of the specific application.

The anodes in accordance with the present invention are used in secondary energy storage devices of the dual ion-type based on sodium or potassium.

A second embodiment of the present invention is accordingly a Na- or K-ion based secondary energy storage device of the dual ion-type comprising an anode, a cathode and an electrolyte wherein the anode comprises a Ti-containing material as defined above.

The cathode materials suitable for the secondary energy storage device in accordance with the present invention may be selected from any materials known to the skilled person for this purpose which have been described in a great variety in the prior art. The skilled person will select the appropriate cathode material using his professional expertise and taking into account the circumstances of the individual application.

A preferred group of materials for the cathode in the secondary energy storage devices in accordance with the present invention are carbon-based materials like e.g. graphite or other carbon materials which have been described in the literature for use in secondary energy storage devices in a grade multiplicity so that no detailed further information is necessary here.

In some applications, graphene has shown to be advantageous as material for the cathode.

Graphene itself is usually considered as a one-atom thick planar sheet of sp2-bonded carbon atoms that are densely packed in a honeycomb structure. The name graphene is derived from graphite and the suffix - ene. Graphite itself consists of a high number of graphene sheets stacked together.

Graphite, carbon nanotubes, fullerenes and graphene in the sense referred to above share the same basic structural arrangement of their constituent atoms. Each structure begins with six carbon atoms, tightly bound together chemically in the shape of a regular hexagon - an aromatic structure similar to what is generally referred to as benzene.

Perfect graphenes consist exclusively of hexagonal cells; pentagonal and heptagonal cells constitute defects in the structure. If an isolated pentagonal cell is present, the plane warps into a cone shape and the insertion of 12 pentagons would create a fullerene.

At the next level of organization is graphene itself, a large assembly of benzene rings in a basically planar sheet of hexagons that resembles chicken wire. The other graphitic forms are built up out of graphene. Buckyballs and the many other nontubular fullerenes can be thought of as graphene sheets wrapped up into atomic-scale spheres, elongated spheroids and the like. Carbon nanotubes are essentially graphene sheets rolled into minute cylinders. And finally, graphite is a thick, three-dimensional stack of graphene sheets; the sheets are held together by weak, attractive intermolecular forces (van der Waals forces). The feeble coupling between graphite sheets enables graphite to be broken up into miniscule wafers.

In the chemical literature graphene was defined officially in 1994 by the IUPAC (Boehm et al., Pure an Appl. Chemistry 66, 1893-1901 (1994)) as follows.

A single carbon layer of the graphitic structure can be considered as the final member of the series naphthalene, anthracene, coronene, etc. and the term graphene should therefore be used to designate the individual carbon layers in graphite intercalation compounds.

According to the IUPAC compendium on technology, the term graphene should only be used when the reactions, structural relations or other properties of individual layers are discussed, but not for three-dimensional structures.

In the literature graphene has also been commonly referred to as monolayer graphite.

One way to obtain graphene is to exfoliate it, i.e. to peel it off from graphite with an adhesive tape repeatedly. Graphene produced this way is, however, extremely expensive.

Another method is to heat silicon carbide to temperatures above 1100°C to reduce it to graphene. This process produces a sample size that is dependent upon the size of the SiC substrate used. However, again products obtained by this process are still very expensive.

Experimental methods have been reported for the production of graphene ribbons consisting of cutting open carbon nanotubes (Nature 2009, 367). Depending on the substrate used (single- or multi-walled nanotubes) single graphene sheets or layers of graphene sheets can be obtained. However, due to the fact that carbon nanotubes are very expensive materials, graphene products obtained this way are not commercially feasible as components of polymer compositions.

M. Choucair et al., Nature Nanotechnology 4, 30-33 (2009) disclose a process for producing gram quantities of graphene by the reduction of ethanol by sodium metal, followed by pyrolysis of the ethoxide product and washing with water to remove sodium salts.

Another way of obtaining graphene layers is via the oxidation of highly ordered graphite. This oxidation introduces oxygen-bearing functional groups into the graphite layers, which under suitable conditions may be deprotonated to a certain extent (or more or less completely), resulting in an electrostatic repulsion between the resulting negative charges of adjacent layers. After sonication, the graphite layers separate and a graphene oxide solution is obtained which may be put on a substrate and then reduced or may be reduced and then put on a substrate. A suitable process is e.g. described in ACS Nano 2008, 2(3), pages 463 to 470 (Becerril et al., Evaluation of solution processed reduced graphene oxide films as transparent conductors).

Recently, a new type of graphene materials, so called nano-graphene platelets or NGP, has been developed and respective products are commercially available, for example from Angstron Materials LLC. NGP refers to an isolated single layer graphene sheet (single layer NGP) or to a stack of graphene sheets (multi-layer NGP). NGPs can be readily mass produced and are available at much lower costs and in larger quantities compared to carbon nanotubes. A broad array of NGPs with tailored sizes and properties can be produced by a combination of thermal, chemical and mechanical treatments.

The electrolyte in the secondary energy storage devices in accordance with the present invention may preferably be an organic electrolyte or an electrolyte based on ionic liquids or mixtures thereof.

Organic electrolytes generally comprise a polar aprotic solvent in combination with a salt based on sodium or potassium. Preferred organic solvents are carbonic acid easterners like ethylene carbonate, propylene carbonate, dimethyl carbonate, diethyl carbonate and mixtures thereof. Further suitable organic solvents are 1,2-dimethoxy ethane (DME), 1,2-diethoxyethane (DEE), ethylmethanesulfonate (EMS), 1,3-dioxolane (DOL), 2-methyl-1,3-dioxolane (2MeDOL), 4-Methyl-1,3-dioxolane (4MeDOL), tetrahydrofuran (THF), 2-Methyltetrahydrofurane (2MeTHF), 2,5-Dimethyltetrahydrofurane (diMeTHF), Methyltetrahydrofurfurylester (2-MMTHF), 2-Ethoxytetrahydrofurane (2-ETHF), 7-Oxabicyclo[2.2.1]heptane (7-OBCH), hexamethylenoxide (HMO), Acetonitrile (AN), and gamma-butyrolactone (GBL) or mixtures thereof.

Preferred salts of sodium or potassium are the perchlorates, the tetrafluoroborates, the hexafluorophosphates, the bisoxalato borates and the hexafluoroarsenates or mixtures thereof, toi name a few preferred examples.

In principle there is no specific limitation concerning the salt which may be used in the electrolyte of the secondary electronic energy storage devices in accordance with the present invention, i.e. the skilled person can freely select from the materials which have been described for the same purpose in the prior art.

Suitable solvents are commercially available from a variety of sources so that no further details need to be given here.

For electrolytes comprising ionic liquids the skilled person can also freely select from the ionic liquids described in the literature for use as electrolyte materials in electrochemical cells and he would use his professional skills to select the best suited ionic liquid in the specific application case. Nearly for the purpose of providing some representative examples 1-Ethyl-3-methylimidazolium-bis(trifluormethanesulfonyl)imide (EMI TFSI), 1-Ethyl-3-methylimidazoliumtrifluoro-methanesulfonate (EMI TRIFLATE), N-methyl-N-propyl pyrrolidiniumbis(fluorosulfonyl)-imide (PYR13FSI) und N-butyl-N-methylpyrrolidiniumbis(trifluoromethanesulfonyl)imide, (PYR14TFSI) may be mentioned here.

The secondary energy storage devices in accordance with the present invention may comprise further components known to the skilled person and described in the prior art for devices of the respective type. In principle there is no specific limitation as to the design of the device provided that the anode comprises that titanium-based material as described herein before.

The secondary energy storage devices in accordance with the present invention provide certain advantages compared to the systems known from the prior art.

First of all sodium and potassium are much more readily available in the required amounts than lithium which is an important economic advantage. Furthermore, due to the dual ion principle realized in the devices in accordance with the present invention, no environmentally harmful and expensive metals like e.g. nickel or cobalt are necessary as ingredients of the cathode.

Finally, the devices in accordance with the present invention provide a very high safety standard, as no anodic lithium deposition (plating) or formation of dendrites is to be expected and a cathodic oxygen production is also excluded.

The devices in accordance with the present invention may be used for the storage of solar energy or and she produced by wind power or other regenerative energy sources and could thus make it possible to use regenerative energies to a greater extent.

Example 1

A titanium dioxide layer with a thickness of approximately 33 µm was deposited by spin coating onto a substrate of zinc oxide glass doped with fluorine. The resulting product formed the anode of an electrochemical cell at which cations are intercalated according to the summary equation

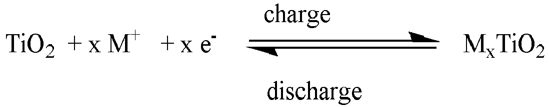

The material for the cathode was a graphite film (thickness 0.2 mm) into which anions are reversibly intercalated in the operation of the cell.

The electrolyte was 1 M sodium perchlorate in a mixture of ethylene carbonate/dimethyl carbonate (1:1 vol/vol).

Charging of this system with a charge voltage of 4.5 V yielded a terminal voltage of 3.8 V. The anode had a potential of -2.1V (vs, standard hydrogen electrode) whereas the cathode potential was +1.7 V (vs. standard hydrogen electrode).

## Claims

1. Anode of a dual-ion Na- or K-ion based secondary energy storage device based on a Ti-containing material.

2. Anode in accordance with claim 1 wherein the Ti-containing materials is a material based on an oxide of titanium.

3. Anode in accordance with claim 2 wherein the oxide of titanium is titanium dioxide.

4. A Na- or K-ion based secondary energy storage device of the dual ion-type comprising an anode, a cathode and an electrolyte wherein the anode comprises a Ti-containing material.

5. A secondary energy storage device in accordance with claim 4 wherein the Ti-containing material is based on an oxide of Ti.

6. A secondary energy storage device in accordance with claim 5 wherein the oxide of Ti is titanium dioxide.

7. A secondary energy storage device in accordance with any of claims 4 to 6
wherein the cathode comprises a carbon-based material.

8. Use of Ti-based materials for the manufacture of anodes in dual-ion secondary energy storage devices.
